# EUROPEAN PATENT APPLICATION

(11) **EP 4 675 401 A1**
(43) Date of publication of application: **07.01.2026**
(21) Application number: 25186078.9
(22) Date of filing: 27.06.2025
(51) Int. Cl.: G06F 3/01, G06F 3/046, H04R 1/10

(54) **GESTURE DETECTION BASED ON ANTENNA IMPEDANCE MEASUREMENTS**

(30) Priority: 02.07.2024 US 202418762542
(71) Applicant: Apple Inc., Cupertino, CA 95014 (US)
(72) Inventor: GUTERMAN, Jerzy S., Cupertino, 95014 (US); MARCU, Cristian, Cupertino, 95014 (US); ERGUN, Ali N., Cupertino, 95014 (US); WANG, Jue, Cupertino, 95014 (US); BARBIERI, Travis A., Cupertino, 95014 (US)
(74) Representative: Froud, Christopher Andrew

(57) **Abstract**

A wireless earbud (10) may have a head (82) and a stalk (84). A speaker (70) may be disposed in the head (82). An antenna (30) may be disposed in the stalk (84). One or more radios (26) may transmit a radio-frequency signal in high and low bands over high and low band arms of the antenna (30). A signal coupler (34) may be coupled to the antenna (30). The signal may include scheduled transmission blocks and optionally unscheduled transmission blocks. A processor (36) may measure impedance of the antenna (30) in the high and low bands using the signal coupler (34) and the transmitted signal. The processor (36) may detect a gesture based on an order of changes in the impedance in the high and low bands. The processor (36) may take suitable action based on the detected gesture. The gesture may include, for example, a volume up or down gesture in implementations where the high and low band arms extend parallel to the stalk (84).

## Description

This application claims priority to U.S. patent application No. 18/762,542, filed July 2, 2024.

### Field

This relates generally to electronic devices, including electronic devices with wireless circuitry.

### Background

Electronic devices are often provided with wireless capabilities. An electronic device with wireless capabilities has wireless circuitry that includes one or more antennas and one or more radios. The wireless circuitry includes one or more radio-frequency transmission lines that convey radio-frequency signals between the antenna(s) and the radio(s).

Electronic devices also often receive input from a user. Electronic devices can include user input devices that receive the input. However, user input devices can occupy an excessive amount of space in an electronic device. If care is not taken, it can be difficult to provide small form factor electronic devices while still allowing the electronic devices to have sufficient space for both wireless circuitry and user input devices.

### Summary

An electronic device such as a wireless earbud may be wirelessly paired to an external device. The wireless earbud may have a head and a stalk. A speaker may be disposed in the head. One or more antennas may be disposed in the stalk. One or more radios may transmit a radio-frequency signal in at least a high band and a low band over the antenna(s) via one or more transmission line paths. One or more signal couplers may be disposed along the transmission line path(s). The antenna(s) may include at least a high band arm that radiates in the high band and a low band arm that radiates in the low band. The radio-frequency signal may include scheduled transmission blocks and may optionally include unscheduled transmission blocks.

One or more processors may measure the impedance of the antenna(s) in at least the high and low bands using the signal coupler(s) and the transmitted radio-frequency signal. The processor(s) may detect a gesture based at least on a change in the impedance in the high band, a change in the impedance in the low band, and an order in which the impedance changes in the high band and the low band. The processor(s) may take suitable action based on the detected gesture. The gesture may include, for example, a swipe gesture such as a volume up or a volume down gesture in implementations where the high and low band arms extend parallel to the stalk.

### Brief Description of the Drawings

FIG. 1 is a perspective view of an illustrative electronic device that includes wireless circuitry in accordance with some embodiments.
FIG. 2 is a circuit diagram of illustrative wireless circuitry in accordance with some embodiments.
FIG. 3 is a circuit diagram showing how an illustrative antenna may be coupled to a radio by a radio-frequency transmission line in accordance with some embodiments.
FIG. 4 is a schematic diagram of an illustrative dual band antenna in accordance with some embodiments.
FIG. 5 is a schematic diagram of an illustrative electronic device having an antenna disposed within a stalk of the electronic device in accordance with some embodiments.
FIG. 6 is a flow chart of illustrative operations involved in using impedance measurements from an antenna to detect a user input gesture in accordance with some embodiments.
FIG. 7 is a timing diagram of illustrative transmission blocks that may be transmitted over an antenna while detecting a user input gesture in accordance with some embodiments.
FIG. 8 is a perspective view of an illustrative wireless earbud that includes a dual band antenna that detects a user input gesture at a stalk in accordance with some embodiments.
FIG. 9 is a flow chart of illustrative operations involved in detecting swipe gestures using impedance measurements of a dual band antenna in accordance with some embodiments.
FIG. 10 is a diagram of different antenna configurations for detecting a user input gesture in accordance with some embodiments.

### Detailed Description

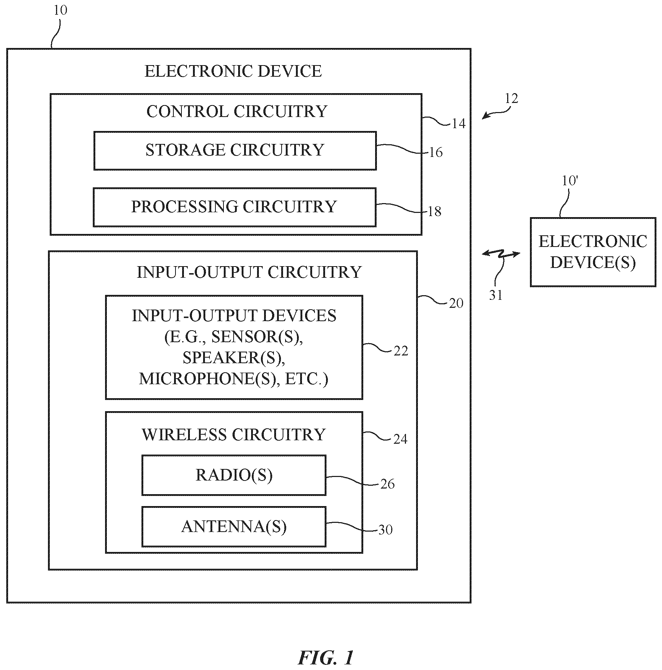

Electronic device 10 of FIG. 1 may be a computing device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device such as an earbud, a set of earbuds, or a set of earbuds with a corresponding case that houses the earbuds, a device embedded in eyeglasses or other equipment worn on a user's head, or other wearable or miniature device, a television, a computer display that does not contain an embedded computer, a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, device 10 may include components located on or within an electronic device housing such as housing 12. Housing 12, which may sometimes be referred to as a case, may be formed of plastic, glass, ceramics, fiber composites, metal (e.g., stainless steel, aluminum, metal alloys, etc.), other suitable materials, or a combination of these materials. In some situations, parts or all of housing 12 may be formed from dielectric or other low-conductivity material (e.g., glass, ceramic, plastic, sapphire, etc.). In other situations, housing 12 or at least some of the structures that make up housing 12 may be formed from metal elements.

Device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors such as microprocessors, microcontrollers, digital signal processors, host processors, baseband processor integrated circuits, application specific integrated circuits, central processing units (CPUs), graphics processing units (GPUs), applications processors, etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as internet browsing applications, voice-over-internet-protocol (VOIP) telephone call applications, email applications, media playback applications, operating system functions, etc. To support interactions with external equipment, control circuitry 14 may be used in implementing communications protocols. Communications protocols that may be implemented using control circuitry 14 include internet protocols, wireless local area network protocols (e.g., IEEE 802.11 protocols - sometimes referred to as Wi-Fi^{®}), protocols for other short-range wireless communications links such as the Bluetooth^{®} protocol or other WPAN protocols, non-Bluetooth protocols for ultra-low-latency audio (ULLA) streaming (e.g., ULLA protocols), IEEE 802.11ad protocols, cellular telephone protocols, MIMO protocols, antenna diversity protocols, satellite navigation system protocols, antenna-based spatial ranging protocols (e.g., radio detection and ranging (RADAR) protocols or other desired range detection protocols for signals conveyed at millimeter and centimeter wave frequencies), etc. Each communication protocol may be associated with a corresponding radio access technology (RAT) that specifies the physical connection methodology used in implementing the protocol.

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include wireless circuitry 24 to support wireless communications. Wireless circuitry 24 may include one or more antennas 30. Wireless circuitry 24 may also include one or more radios 26. Each radio 26 may include circuitry that operates on signals at baseband frequencies (e.g., baseband processor circuitry), signal generator circuitry, modulation/demodulation circuitry (e.g., one or more modems), radio-frequency transceiver circuitry (e.g., radio-frequency transmitter circuitry, radio-frequency receiver circuitry, mixer circuitry for downconverting radio-frequency signals to baseband frequencies or intermediate frequencies between radio and baseband frequencies and/or for upconverting signals at baseband or intermediate frequencies to radio-frequencies, etc.), amplifier circuitry (e.g., one or more power amplifiers and/or one or more low-noise amplifiers (LNAs)), analog-to-digital converter (ADC) circuitry, digital-to-analog converter (DAC) circuitry, control paths, power supply paths, signal paths (e.g., radio-frequency transmission lines, intermediate frequency transmission lines, baseband signal lines, etc.), switching circuitry, filter circuitry, and/or any other circuitry for transmitting and/or receiving radio-frequency signals using antenna(s) 30. The components of each radio 26 may be mounted onto a respective substrate or integrated into a respective integrated circuit, chip, package (e.g., system-in-package), or system-on-chip (SOC). If desired, the components of multiple radios 26 may share a single substrate, integrated circuit, chip, package, or SOC.

Antenna(s) 30 may be formed using any desired antenna structures. For example, antenna(s) 30 may include antennas with resonating elements that are formed from loop antenna structures, patch antenna structures, inverted-F antenna structures, slot antenna structures, planar inverted-F antenna structures, helical antenna structures, monopole antennas, dipoles, hybrids of these designs, etc. Filter circuitry, switching circuitry, impedance matching circuitry, and/or other antenna tuning components may be adjusted to adjust the frequency response and wireless performance of antenna(s) 30 over time.

Transceiver circuitry in radios 26 may convey radio-frequency signals using one or more antennas 30 (e.g., antenna(s) 30 may convey the radio-frequency signals for the transceiver circuitry). The term "convey radio-frequency signals" as used herein means the transmission and/or reception of the radio-frequency signals (e.g., for performing unidirectional and/or bidirectional wireless communications with external wireless communications equipment). Antenna(s) 30 may transmit radio-frequency signals by radiating the radio-frequency signals into free space (or to free space through intervening device structures such as a dielectric cover layer). Antenna(s) 30 may additionally or alternatively receive radio-frequency signals from free space (e.g., through intervening devices structures such as a dielectric cover layer). The transmission and reception of radio-frequency signals by antenna(s) 30 each involve the excitation or resonance of antenna currents on an antenna resonating element in the antenna by the radio-frequency signals within the frequency band(s) of operation of the antenna.

Radios 26 may use antenna(s) 30 to transmit and/or receive radio-frequency signals within different frequency bands at radio frequencies (sometimes referred to herein as communications bands or simply as a "bands"). The frequency bands handled by radios 26 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), and/or other Wi-Fi^{®} bands (e.g., from 1875-5160 MHz), wireless personal area network (WPAN) frequency bands such as the 2.4 GHz Bluetooth^{®} band or other WPAN communications bands, ULLA bands, cellular telephone communications bands such as a cellular low band (LB) (e.g., 600 to 960 MHz), a cellular low-midband (LMB) (e.g., 1400 to 1550 MHz), a cellular midband (MB) (e.g., from 1700 to 2200 MHz), a cellular high band (HB) (e.g., from 2300 to 2700 MHz), a cellular ultra-high band (UHB) (e.g., from 3300 to 5000 MHz, or other cellular communications bands between about 600 MHz and about 5000 MHz), 3G bands, 4G LTE bands, 3GPP 5G New Radio Frequency Range 1 (FR1) bands below 10 GHz, 3GPP 5G New Radio (NR) Frequency Range 2 (FR2) bands between 20 and 60 GHz, other centimeter or millimeter wave frequency bands between 10-300 GHz, near-field communications frequency bands (e.g., at 13.56 MHz), satellite navigation frequency bands such as the Global Positioning System (GPS) L1 band (e.g., at 1575 MHz), L2 band (e.g., at 1228 MHz), L3 band (e.g., at 1381 MHz), L4 band (e.g., at 1380 MHz), and/or L5 band (e.g., at 1176 MHz), a Global Navigation Satellite System (GLONASS) band, a BeiDou Navigation Satellite System (BDS) band, ultra-wideband (UWB) frequency bands that operate under the IEEE 802.15.4 protocol and/or other ultra-wideband communications protocols (e.g., a first UWB communications band at 6.5 GHz and/or a second UWB communications band at 8.0 GHz), communications bands under the family of 3GPP wireless communications standards, communications bands under the IEEE 802.XX family of standards, satellite communications bands such as an L-band, S-band (e.g., from 2-4 GHz), C-band (e.g., from 4-8 GHz), X-band, Ku-band (e.g., from 12-18 GHz), Ka-band (e.g., from 26-40 GHz), etc., industrial, scientific, and medical (ISM) bands such as an ISM band between around 900 MHz and 950 MHz or other ISM bands below or above 1 GHz, one or more unlicensed bands, one or more bands reserved for emergency and/or public services, and/or any other desired frequency bands of interest. Wireless circuitry 24 may also be used to perform spatial ranging operations if desired.

Each radio 26 may transmit and/or receive radio-frequency signals according to a respective radio access technology (RAT) that determines the physical connection methodology for the components in the corresponding radio. One or more radios 26 may implement multiple RATs if desired. As just one example, the radios 26 in device 10 may include a Bluetooth (BT) radio for conveying BT signals using one or more antennas 30 and a ULLA radio for conveying ULLA signals using one or more antennas. The ULLA radio may support communications using an associated ULLA protocol (e.g., a non-BT audio/voice streaming/playback protocol). The ULLA protocol may involve communications without performing time division duplexing between a primary device and a pair of earbuds and may involve communications with a lower packet re-transmission count limit, lower latency, lower glitch rate (e.g., 1 glitch per hour or fewer), more stability, and less interference than the Bluetooth protocol, for example. This example is illustrative and, in general, radios 26 may include any desired combination of radios for covering any desired combination of RATs.

Radios 26 may use antenna(s) 30 to transmit and/or receive radio-frequency signals to convey wireless communications data between device 10 and external wireless communications equipment such as one or more electronic devices 10' via communications link(s) 31 (e.g., communications link(s) 31 may be maintained using radio-frequency signals). Devices 10' may include similar devices to device 10 or different types of devices. Wireless communications data may be conveyed by radios 26 bidirectionally or unidirectionally. The wireless communications data may, for example, include data that has been encoded into corresponding data symbols, data packets, data frames, datagrams, etc. (e.g., wireless data associated with a telephone call, streaming media content, internet browsing, wireless data associated with software applications running on device 10, email messages, etc.).

Configurations in which device 10 is a wireless headset, headphone, earphone, or earbud that play audio, that receive microphone input, and/or that perform other functions are sometimes described herein as an example. Device 10 is therefore sometimes also referred to herein as earbud 10. In these configurations, device 10 may perform wireless communications with one or more devices 10' over communications link(s) 31. Devices 10' may, for example, include a primary device (e.g., a laptop computer, a desktop computer, a tablet computer, a cellular telephone, etc.) for which device 10 is an accessory (e.g., device 10 may be wirelessly paired with device 10' over a corresponding communications link 31). In implementations where device 10 is a first earbud in a pair of earbuds to be worn in a first of the user's ears, devices 10' may also include an earbud to be worn in other one of the user's ears. These configurations are illustrative and non-limiting. In general, devices 10 and 10' may include any number of electronic devices that communicate with one another wirelessly. Device 10' is sometimes referred to herein as an external device 10' or a paired device 10' for device 10.

The example of FIG. 1 is illustrative and non-limiting. Although control circuitry 14 is shown separately from wireless circuitry 24 in the example of FIG. 1 for the sake of clarity, wireless circuitry 24 may include processing circuitry (e.g., one or more processors) that forms a part of processing circuitry 18 and/or storage circuitry that forms a part of storage circuitry 16 of control circuitry 14 (e.g., portions of control circuitry 14 may be implemented on wireless circuitry 24). Wireless circuitry 24 may include any desired number of antennas 30. Some or all of the antennas 30 in wireless circuitry 24 may be arranged into one or more phased antenna arrays (e.g., for conveying radio-frequency signals over a steerable signal beam). If desired, antenna(s) 30 may be operated using a multiple-input and multiple-output (MIMO) scheme and/or using a carrier aggregation (CA) scheme.

If desired, device 10 may receive a user input (e.g., from a user of device 10). The user input may include a user input gesture. A user input gesture may be a gesture (e.g., a predetermined motion) performed by one or more parts of the user's body relative to device 10 (e.g., one or more of the user's fingers, the user's hand(s), the user's head, the user's arm(s), the user's ear(s), etc.). In general, device 10 may perform any desired operations based on the user input gesture. For example, device 10 may adjust an output produced by one or more of input-output devices 22 based on the detected user input gesture. If desired, radio(s) 26 may transmit radio-frequency signals to one or more devices 10' over communications link(s) 31 that contain wireless data that identifies the user input gesture and/or that instructs or requests that device(s) 10' take one or more actions based on the user input gesture.

One or more components of device 10 may receive and/or detect the user input gesture. In some implementations, device 10 may include a dedicated user input device (e.g., in input-output devices 22) that receives and/or detects a user input. As examples, input-output devices 22 may include a proximity sensor, touch sensor, light sensor, force sensor, temperature sensor, and/or orientation sensor that detects when a user has placed device 10 on or in their ear, when a user is touching one or more locations on device 10, an orientation and/or motion of device 10, when a user is squeezing device 10 between their fingers, etc.

Predetermined patterns of the received/detected user input may be associated with corresponding user input gestures. Processing circuitry on device 10 (e.g., processing circuitry 18) may detect the predetermined patterns in received user input to identify when a user input gesture has been provided to device 10. The processing circuitry may then take suitable action based on the identified or detected user input gesture. In some implementations that are described herein as an example, user input gestures to device 10 may include one or more user input gestures associated with the playback of streaming audio data on a speaker of device 10, streaming voice data on the speaker of device 10 (e.g., for a voice call), and/or audio/voice data gathered by a microphone on device 10 (e.g., for performing a voice command, performing a voice call, interacting with a digital assistant, etc.).

In some implementations, device 10 includes a touch sensor with an array of capacitive sensor electrodes disposed at different locations around housing 12. In these implementations, the capacitive sensor electrodes may detect the presence of a user's finger adjacent the sensor electrodes (e.g., by measuring changes in the capacitance of the electrodes). Processing circuitry on device 10 may process the capacitances of the electrodes over time. The processing circuitry may, for example, detect a swipe gesture associated with the user sliding or swiping their finger along housing 12 when the capacitance of two or more of the electrodes change over time in a predetermined sequence (e.g., consistent with capacitive changes across housing 12 when the user slides their finger across the housing in a particular direction).

The swipe gesture may be, for example, a volume up or volume down gesture. In response to detecting a volume up gesture, control circuitry 14 may increase the volume of one or more speakers in input-output devices 22 and/or may transmit a volume up signal to device 10' (e.g., via a corresponding communications link 31) that instructs device 10' to increase a volume of a speaker on device 10' and/or that informs device 10' that device 10 has increased its speaker volume. In response to detecting a volume down gesture, control circuitry 14 may decrease the volume of one or more speakers in input-output devices 22 and/or may transmit a volume down signal to device 10' (e.g., via a corresponding communications link 31) that instructs device 10' to decrease a volume of a speaker on device 10' and/or that informs device 10' that device 10 has decreased its speaker volume. These examples are illustrative and non-limiting. In general, the device 10 may detect any desired user input gestures.

In practice, arrays of capacitive sensor electrodes and/or other input devices in input/output devices 22 can occupy excessive space in device 10, which can cause device 10 to be needlessly bulky or heavy and/or which can prevent device 10 from including other components while exhibiting a compact form factor (e.g., for comfortable use within a user's ear). In addition, arrays of capacitive sensor electrodes can exhibit excessive latency and can cause device 10 to take an excessive amount of time to detect a user input gesture. To help minimize space consumption and weight for device 10 while also minimizing the amount of time required to detect user input gestures, one or more of antenna(s) 30 may be used to detect user input gestures. In these implementations, control circuitry 14 may perform impedance measurements using at least one antenna 30 and may detect user input gestures based on the impedance measurements. Control circuitry 14 may perform impedance measurements using a signal coupler coupled to the antenna.

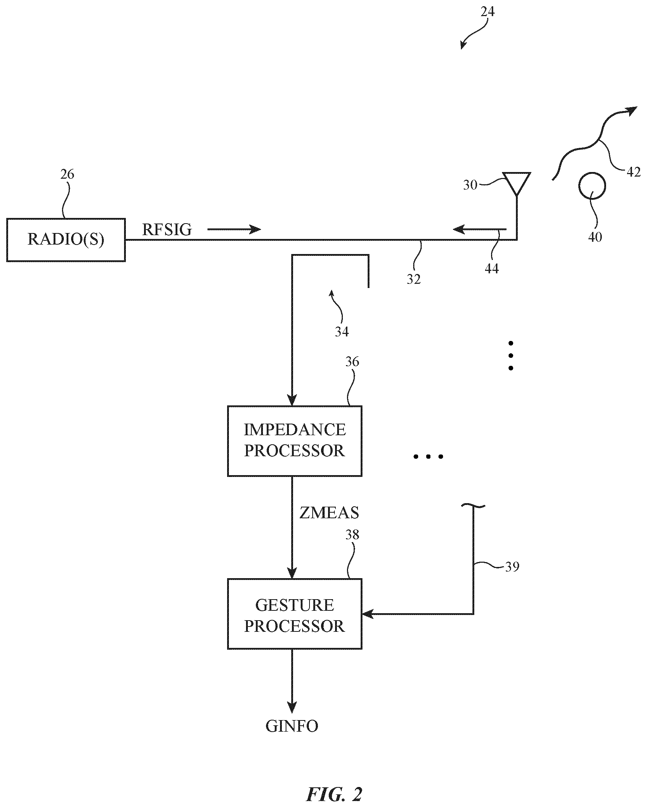

FIG. 2 is a circuit diagram showing how a signal coupler may be used to perform impedance measurements of a corresponding antenna 30. As shown in FIG. 2, radio(s) 26 may be coupled to an antenna 30 in wireless circuitry 24 over a radio-frequency transmission line path such as transmission line path 32.

Transmission line path 32 may include one or more radio-frequency transmission lines. The radio-frequency transmission line(s) in transmission line path 32 may include stripline transmission lines (sometimes referred to herein simply as striplines), coaxial cables, coaxial probes realized by metalized vias, microstrip transmission lines, edge-coupled microstrip transmission lines, edge-coupled stripline transmission lines, waveguide structures, combinations of these, etc. Multiple types of radio-frequency transmission line may be used to form transmission line path 32. Filter circuitry, switching circuitry, impedance matching circuitry, phase shifter circuitry, amplifier circuitry, and/or other circuitry (not shown) may be disposed on transmission line path 32. One or more antenna tuning components (not shown) for adjusting the frequency response of antenna 30 in one or more bands may be disposed on transmission line path 32 and/or may be integrated within antenna 30 (e.g., coupled between the antenna ground and the antenna resonating element of antenna 30, coupled between different portions of the antenna resonating element of antenna 30, etc.).

If desired, one or more of the radio-frequency transmission lines in transmission line path 32 may be integrated into ceramic substrates, rigid printed circuit boards, and/or flexible printed circuits. In some suitable arrangements, the radio-frequency transmission lines may be integrated within multilayer laminated structures (e.g., layers of a conductive material such as copper and a dielectric material such as a resin that are laminated together without intervening adhesive) that may be folded or bent in multiple dimensions (e.g., two or three dimensions) and that maintain a bent or folded shape after bending (e.g., the multilayer laminated structures may be folded into a particular three-dimensional shape to route around other device components and may be rigid enough to hold its shape after folding without being held in place by stiffeners or other structures). All the multiple layers of the laminated structures may be batch laminated together (e.g., in a single pressing process) without adhesive (e.g., as opposed to performing multiple pressing processes to laminate multiple layers together with adhesive).

As shown in FIG. 2, a signal coupler such as signal coupler 34 may be disposed along transmission line path 32 between radio(s) 26 and antenna 30. Signal coupler 34 may be a directional coupler (e.g., a directional switch coupler) or any other desired signal coupler that couples radio-frequency signals off of transmission line path 32 and towards impedance processor 36. The signal coupler may form part of a corresponding reflectometer, for example. If desired, signal coupler 34 may include transmission line structures, transformers, or other signal coupling structures.

Impedance processor 36 may include a feedback receiver (e.g., a dedicated feedback receiver or a feedback receiver integrated into one or more of radio(s) 26), a power detector, a voltage detector, a current detector, some or all of one or more processors in processing circuitry 18 of FIG. 1), and/or other circuitry that measures the impedance of antenna 30 based on radio-frequency signals on transmission line path 32. Signal coupler 34 may be, for example, a four-port signal coupler having a first port communicatively coupled to radio(s) 26, a second port communicatively coupled to antenna 30, a third port switchably coupled to a first impedance termination (e.g., a coupled port or node), and a fourth port switchably coupled to a second impedance termination (e.g., an isolated port or node). Impedance processor 36 may be coupled to the third port or the fourth port.

The radio-frequency signal coupled off of transmission line path 32 by signal coupler 34 may exhibit a corresponding voltage, current, and/or power. Impedance processor 36 may measure the voltage, current, and/or power of the coupled signal (e.g., under different states of switching circuitry in signal coupler 34) to measure the complex impedance of antenna 30. The impedance of antenna 30 may change over time based on the environmental loading conditions around antenna 30. For example, when an external object 40 is near antenna 30, external object 40 may load the impedance of antenna 30 in a particular manner (e.g., may change the impedance of antenna 30 away from a free space impedance). By detecting the impedance of antenna 30 and/or changes in the impedance of antenna 30, device 10 may detect the presence or absence of external object 40 relative to antenna 30. Device 10 may use the detection of external object 40 to detect a corresponding user gesture input.

For example, during impedance measurement, radio(s) 26 may transmit a radio-frequency signal RFSIG over transmission line path 32. Antenna 30 may radiate radio-frequency signal RFSIG (e.g., as wireless signal 42 for reception at device 10' of FIG. 1 over a corresponding communications link 31). The radio-frequency signal RFSIG propagating towards antenna 30 along transmission line path 32 is sometimes also referred to as a forward wave (FW) signal. Some of the FW signals will reflect off of antenna 30 and back towards signal coupler 34 as shown by arrow 44 (e.g., due to the impedance discontinuity between transmission line path 32 and antenna 30, which may change in different ways at different frequencies based on the presence of an external object 40). These reflected signals are sometimes referred to as reverse wave (RW) signals.

In a first state of the switching circuitry in signal coupler 34, impedance processor 36 may perform FW measurements. Signal coupler 34 may couple some of the FW signals off of transmission line path 32 and may pass the FW signals to impedance processor 36. Impedance processor 36 may measure the voltage, current, power, magnitude, and/or phase of the FW signals. Impedance processor 36 may measure the amplitude and/or phase of the FW signals. In a second state of the switching circuitry in signal coupler 34, impedance processor 36 may perform RW measurements. Signal coupler 34 may couple some of the RW signals off of transmission line path 32 and may pass the RW signals to impedance processor 36. Impedance processor 36 may measure the voltage, current, power, magnitude, and/or phase of the RW signals. This example is illustrative and, if desired, signal coupler 34 may have other architectures.

As the impedance of antenna 30 changes over time (e.g., due to external object 40 moving close to, away from, and/or over antenna 30), the phase and/or magnitude of the RW signals and the FW signals coupled off transmission line path 32 by signal coupler 34 will change over time. Impedance processor 36 may generate impedance information ZMEAS based on the FW and/or RW signals coupled off transmission line path 32 by signal coupler 34. Impedance information ZMEAS (sometimes also referred to herein as impedance values ZMEAS, impedance sensor data ZMEAS, impedance data ZMEAS, or impedance measurements ZMEAS) may be indicative of the complex impedance of antenna 30 (e.g., as loaded by external object 40 when external object 40 is present adjacent antenna 30). Impedance information ZMEAS may include, for example, one or more complex impedance values (e.g., a complex impedance value characterizing the complex impedance of antenna 30), reflection coefficient values for antenna 30, complex scattering parameter (S-parameter) values (e.g., S11 values characterizing reflection coefficient, S12 values characterizing reverse voltage gain, S13 values, S14 values, S21 values characterizing forward voltage gain, S22 values, S23 values, etc.), return loss values, and/or voltage standing wave ratio (VSWR) values (e.g., characterizing the VSWR of antenna 30 as loaded by the presence or absence of external object 40).

Impedance processor 36 may transmit impedance information ZMEAS to gesture processor 38. Impedance information ZMEAS may be indicative of the presence or absence of external object 40 at, adjacent, or near to antenna 30. External object 40 may be, for example, a user's finger and impedance information ZMEAS may be indicative of the user's finger at or next to antenna 30. This may occur, for example, when the user is attempting to provide a user input or to perform a user input gesture for device 10.

If desired, gesture processor 38 may also receive impedance information from one or more other antennas 30 in device 10 over additional paths 39. Gesture processor 38 (e.g., some or all of one or more processors in processing circuitry 18 of FIG. 1) may detect, estimate, and/or identify one or more user input gestures (sometimes referred to herein simply as gestures) based on the impedance information ZMEAS gathered for antenna 30 (and optionally impedance information gathered for one or more additional antennas 30 as received over additional paths 39). Gesture processor 38 may, for example, identify (detect) a gesture based on a change in impedance information ZMEAS over time and/or across two or more frequency bands of radio-frequency signal RFSIG. Gesture processor 38 may generate gesture information GINFO that identifies, includes, or otherwise characterizes the detected gesture. Processing circuitry 18 (FIG. 1) may perform any desired operations based on the detected gesture. Impedance processor 36 may generate impedance information ZMEAS much more rapidly than capacitive sensor electrodes are able to detect the presence of external object 40 (e.g., because transmission blocks in radio-frequency signal RFSIG are scheduled much more frequently than the refresh rate supported by capacitive sensor electrodes). Detecting gestures based on the impedance of antenna 30 may thereby exhibit less latency than detecting gestures using other sensors such as capacitive sensors. If desired, one or more other sensors such as capacitive sensors may be omitted to reduce the volume and/or weight of device 10.

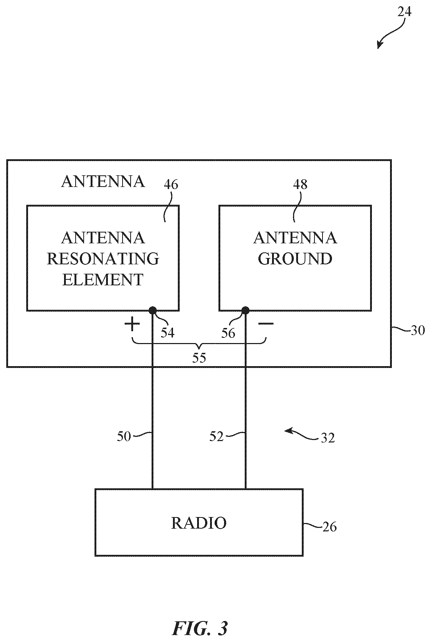

FIG. 3 is a schematic diagram showing how antenna 30 may be fed by transmission line path 32. As shown in FIG. 3, antenna 30 may have a corresponding antenna feed 55. Antenna 30 may include one or more antenna resonating (radiating) elements 46 and an antenna ground 48. Antenna resonating element(s) 46 may include one or more radiating arms (e.g., inverted-F antenna arms, monopole arms, dipole arms, etc.), slots, waveguides, dielectric resonators, patches, parasitic elements, loops, indirect feed elements, and/or any other desired antenna radiators. Antenna feed 55 may include a positive antenna feed terminal 54 coupled to antenna resonating element 46 and a ground antenna feed terminal 56 coupled to antenna ground 48. If desired, one or more conductive paths (sometimes referred to herein as ground paths, short paths, or return paths) may couple antenna resonating element 46 to antenna ground 48.

One or more radios 26 may be coupled to antenna feed 55 using transmission line path 32. Transmission line path 32 may include a signal conductor such as signal conductor 50 (e.g., a positive signal conductor). Transmission line path 32 may include a ground conductor such as ground conductor 52. Ground conductor 52 may be coupled to ground antenna feed terminal 56 of antenna feed 55. Signal conductor 50 may be coupled to positive antenna feed terminal 54 of antenna feed 55.

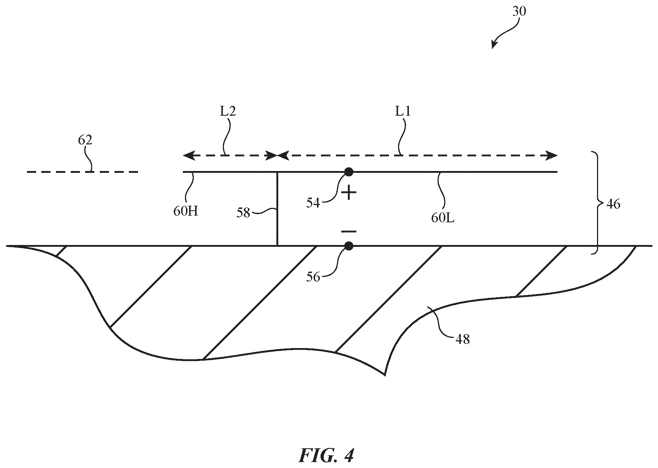

In some implementations that are described herein as an example, antenna 30 may be a dual band antenna that conveys radio-frequency signals in at least two frequency bands. FIG. 4 is a schematic diagram of antenna 30 in implementations where antenna 30 is a dual band antenna. As shown in FIG. 4, the antenna resonating element 46 of antenna 30 may include at least two antenna arms such as arm 60H and arm 60L. Arms 60H and 60L may extend from opposing sides of a return path 58. Return path 58 may couple arms 60H and 60L to antenna ground 48. Positive antenna feed terminal 54 may be coupled to arm 60L or may be coupled to arm 60H. Alternatively, different respective positive antenna feed terminals 54 may be coupled to arms 60H and 60L. When implemented in this way, antenna 30 may form a dual-band inverted-F antenna (e.g., antenna resonating element 46 may be an inverted-F antenna resonating element). This is illustrative and non-limiting. In general, arms 60H and 60L may be replaced with any desired antenna radiators or portions of an antenna radiator.

In general, arms 60H and 60L may include any desired number of straight and/or curved segments having any desired number of straight and/or curved edges. While illustrated as lines in the example of FIG. 4 for the sake of clarity, arms 60H and 60L may have any desired widths (e.g., arms 60H and/or 60L may be a type of inverted-F antenna arm sometimes also referred to as a planar inverted-F antenna arm). In some implementations that are described herein as an example, arms 60H and 60L may be substantially linear and may each extend away from return path 58 parallel to a linear axis 62. Arms 60H and 60L may, if desired, be colinear. Alternatively, arm 60H and/or arm 60L may each have multiple segments extending at different angles, where the longest segment(s) of the arm(s) extend parallel to and/or colinear with linear axis 62.

In general, the length of an arm 60 of antenna 30 determines the resonating wavelength(s) of antenna 30 and thus the frequencies of the radio-frequency signals conveyed by the antenna. In the example of FIG. 4, the length of a given arm 60 may be approximately one-quarter of an effective wavelength of operation of antenna 30 (e.g., in a fundamental mode, where effective wavelength is equal to vacuum wavelength times a constant given by the dielectric properties of the materials around the antenna). Arm 60L may be longer than arm 60H. This may configure arm 60L to convey radio-frequency signals at longer wavelengths and thus lower frequencies than arm 60H. Arm 60L is sometimes also referred to herein as low band arm 60L whereas arm 60H is sometimes also referred to herein as high band arm 60H.

Low band arm 60L may, for example, have a length L1 (e.g., measured from return path 58 to the tip of low band arm 60L). High band arm 60H may have a length L2 (e.g., measured from return path 58 to the tip of high band arm 60H) that is less than length L1. Length L1 may configure low band arm 60L to resonate, radiate, and/or convey radio-frequency signals in a first frequency band FL. Length L2 may configure high band arm 60H to resonate, radiate, and/or convey radio-frequency signals in a second frequency band FH that is at higher frequencies than low band arm FL. Frequency band FH is sometimes referred to herein as high band FH whereas frequency band FL is sometimes referred to herein as low band FL.

High band FH and low band FL may be any desired frequency bands. In some implementations that are described herein as an example, low band FL may be a 2.4 GHz frequency band and high band FH may be a 5 GHz frequency band (e.g., for conveying radio-frequency Bluetooth, WLAN, and/or ULLA signals in two Bluetooth, WLAN, and/or ULLA frequency bands). If desired, antenna 30 may include additional arms for covering additional bands. If desired, low band arm 60L and/or high band arm 60H may exhibit one or more harmonic modes to cover additional frequency bands. One or more tuning components (not shown) may be coupled to low band arm 60L and/or high band arm 60H to tune or adjust the frequencies of low band FL and/or high band FH over time.

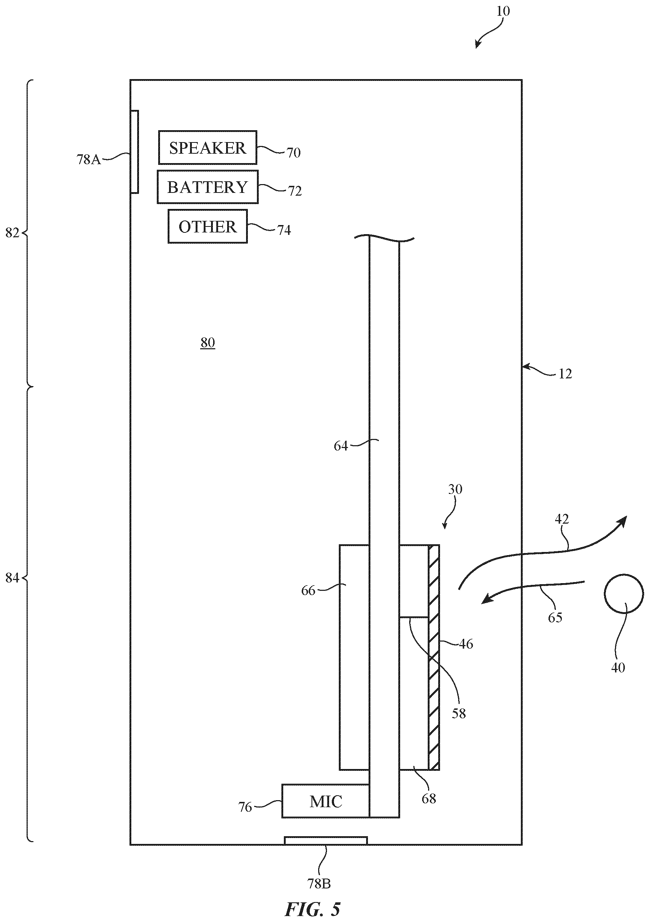

FIG. 5 is a schematic diagram showing one example of how the dual band antenna 30 of FIG. 5 may be integrated into device 10 in implementations where device 10 is a wireless earbud. As shown in FIG. 5, housing 12 of device 10 may include a first portion 82 and second portion 84 extending away from first portion 82. Portion 82 is sometimes also referred to herein as the head 82 or main body 82 of device 10. Portion 84 is sometimes also referred to herein as the stalk 84, elongated portion 84, or protruding portion 84 of device 10. When a user wears device 12 in their ear, head 82 may overlap and/or may be inserted into the user's ear. If desired, a removable ear tip (not shown) may be attached to head 82. Housing 12 may surround and enclose an interior 80 of device 10.

Housing 12 may include one or more ports 78 that are aligned with one or more internal components within interior 80. For example, head 82 may include a port 78A aligned with a speaker 70 in device 10 (sometimes also referred to herein as speaker port 78A). Speaker 70 may generate audio signals (e.g., acoustic waves or sound) and may emit the audio signals through speaker port 78A to be heard by the user while wearing device 10. Device 10 may include a battery 72 and other components 74 in interior 80. Battery 72 may be disposed in head 82, in stalk 84, or may extend between head 82 and stalk 84. Other components 74 may include any desired components as shown in FIG. 1, for example.

If desired, device 10 may include one or more microphones such as microphone (MIC) 76 in interior 80. Microphone 76 may be disposed within stalk 84 (e.g., opposite head 82). Stalk 84 may include a port 78B aligned with microphone 76 (sometimes also referred to herein as microphone port 78B). Microphone 76 may receive audio signals through microphone port 78B (e.g., acoustic waves produced by an external sound source such as the user's voice). Microphone 76 and microphone port 78B may, for example, face the user's mouth while head 82 is placed in the user's ear.

As shown in FIG. 5, device 10 may include a printed circuit board such as printed circuit 64. Printed circuit 64 may be a rigid printed circuit board, a flexible printed circuit board, or a rigid printed circuit board with a flexible printed circuit tail, as examples. Printed circuit 64 may extend from head 82 into and through stalk 84 of device 10. One or more of speaker 70, battery 72, other components 74, and/or microphone 76 may be mounted to printed circuit 64.

If desired, antenna 30 (e.g., the dual band antenna of FIG. 4) may be mounted to a portion of printed circuit 64 within stalk 84. The antenna resonating element 46 of antenna 30 may, for example, be formed from a layer of conductive traces or other conductive materials layered onto a substrate 68 that is mounted to printed circuit 64. Substrate 68 may include plastic, ceramic, or other materials and is sometimes also referred to herein as antenna carrier 68. The return path 58 of antenna 30 may extend through substrate 68 (e.g., may be coupled to ground traces in flexible printed circuit 64 that form the part of the antenna ground for antenna 30). If desired, a system-in-package (SiP) such as SiP 66 may be mounted to printed circuit 64 (e.g., opposite substrate 68). If desired, antenna 30 may at least partially overlap SiP 66. SiP 66 may, for example, contain radio(s) 26 (FIGS. 1-3) that are coupled to antenna 30 through printed circuit 64 and substrate 68 by transmission line path 32 (FIGS. 2 and 3).

During operation, antenna 30 may receive wireless signals 65 from device 10' (FIG. 1) (e.g., through a dielectric portion of housing 12). Antenna 30 may transmit wireless signals 42 to device 10' through housing 12. Radio(s) 26 and antenna 30 may transmit wireless signals 42 at frequencies in at least low band FL and high band FH (e.g., using arms 60L and 60H of FIG. 4 respectively). The signal coupler 34 coupled to antenna 30 and impedance processor 36 (FIG. 2) may generate impedance information ZMEAS associated with antenna 30 while antenna 30 transmits wireless signals 42. Impedance information ZMEAS may include impedance information about antenna 30 in both low band FL and high band FH.

The user of device 10 may perform a user input gesture using external object 40 (e.g., the user's finger or other body parts) by bringing external object 40 near to device 10 and/or by performing one or more predetermined movements or motions of external object 40 relative to housing 12. The presence of external object 40 and the one or more predetermined movements or motions may produce corresponding values and/or changes in impedance information ZMEAS in low band FL and/or high band FH. Gesture sensor 38 (FIG. 2) may identify or detect the user input gesture based on changes in impedance information ZMEAS in low band FL and high band FH over time.

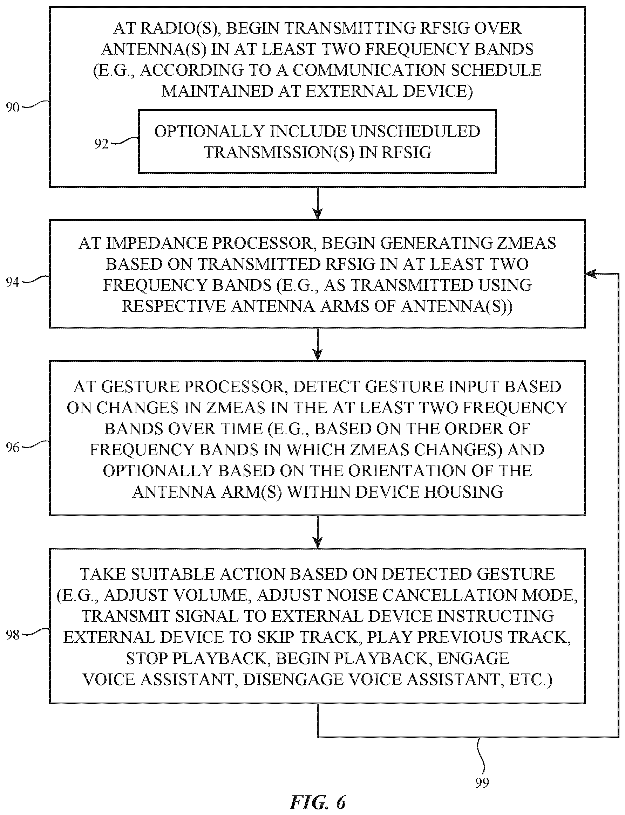

FIG. 6 is a flow chart of illustrative operations that may be performed by device 10 to detect user input gestures based on the impedance of one or more antennas 30 (e.g., an antenna 30 in stalk 84 of FIG. 5). At operation 90, radio(s) 26 may begin transmitting radio-frequency signal RFSIG to one or more devices 10' (FIG. 1) over one or more antennas 30 via the corresponding transmission line path(s) 32 (FIG. 2). Each antenna 30 may have a corresponding signal coupler 34, impedance processor 36, and/or gesture processor 38 (FIG. 2) for detecting and characterizing the impedance of the associated antenna. If desired, a single impedance processor 36 and/or a single gesture processor 38 may be shared by multiple antennas 30.

Radio(s) 26 and antenna(s) 30 may transmit radio-frequency signal RFSIG in at least two frequency bands such as low band FL and high band FH. Radio(s) 26 may transmit radio-frequency signal RFSIG according to a communication schedule for device 10 (e.g., a Bluetooth communications schedule and/or a ULLA schedule). The communication schedule may be generated, maintained, adjusted, and/or processed by device 10', for example. The communication schedule may specify a set of time slots and/or frequencies (e.g., OFDM blocks, symbols, or resource elements) during which radio(s) 26 are to transmit radio-frequency signal RFSIG at frequencies within frequency bands FL and FH.

The transmitted radio-frequency signal RFSIG may carry wireless data (e.g., data bits) organized into data structures such as symbols, packets, frames, datagrams, etc. (e.g., as specified by the communications protocol associated with radio(s) 26). The wireless data may include audio data such as voice data gathered by microphone 76 (FIG. 5), audio data received from a first device 10' (e.g., a primary device) that is relayed by device 10 to a second device 10' (e.g., another earbud for the user's other ear), sensor data gathered by one or more sensors on device 10 (e.g., some or all of impedance information ZMEAS of FIG. 2, some or all of gesture information GINFO of FIG. 2, light sensor information, force sensor information, orientation sensor information, etc.), control data (e.g., control signals directing device 10' to adjust the wireless playback of audio data at device 10), and/or other information.

Radio(s) 26 and antenna(s) 30 may also receive radio-frequency signals from device 10' (e.g., via wireless signals 65 of FIG. 5). Device 10' may transmit the radio-frequency signals to device 10 according to the communications schedule. The received radio-frequency signals may carry wireless data (e.g., audio data, sensor data, control data, etc.). As one example, the wireless data transmitted by radio(s) 26 on device 10 may include at least an acknowledgement packet or frame to each packet or frame in the wireless data received from device 10'.

If desired, at optional operation 92, radio(s) 26 may include one or more unscheduled transmissions in the radio-frequency signals RFSIG transmitted over antenna(s) 30. The unscheduled transmissions may include one or more symbols, packets, datagrams, or frames of wireless data that were not included in the communications schedule for device 10 and/or that are not required by the communications protocol of radio(s) 26. Operation 92 may be omitted if desired. Radio(s) 26 may continue transmitting radio-frequency signal RFSIG (e.g., according to the communications schedule and optionally including unscheduled transmissions) while processing the remaining operations of FIG. 5.

At operation 94, the impedance processor(s) 36 of antenna(s) 30 may begin to generate (e.g., compute, calculate, output, produce, estimate, identify, etc.) impedance information ZMEAS for antenna(s) 30. Impedance information ZMEAS may include impedance information for each of the frequency bands of the transmitted radio-frequency signal RFSIG or, equivalently, for each of the arms 60H and 60L in antenna(s) 30 (e.g., impedance information ZMEAS may include impedance information gathered using radio-frequency signal RFSIG while radio-frequency signal RFSIG is at one or more frequencies in each of at least low band FL and high band FH). The gathered impedance information ZMEAS may characterize the presence of external object 40 at or near antenna(s) 30. Impedance information ZMEAS gathered using low band FL may, for example, characterize the presence of external object 40 at or adjacent low band arm 60L of antenna(s) 30 (FIG. 4). Impedance information ZMEAS gathered using low band FH may, for example, characterize the presence of external object 40 at or adjacent high band arm 60H of antenna(s) 30 (FIG. 4). Impedance processor(s) 36 may continue to generate impedance information ZMEAS while processing the remaining operations of FIG. 5.

At operation 96, gesture processor 38 may detect (e.g., calculate, estimate, generate, determine, output, identify, etc.) a user input gesture based on one or more changes in the gathered impedance information ZMEAS over time and/or across two or more of the frequency bands of the transmitted radio-frequency signal RFSIG (e.g., in at least low band FL and high band FH). Gesture processor 38 may, for example, detect the user input gesture (e.g., a swipe gesture) based on the order of frequency bands in which impedance information ZMEAS changes over time and, if desired, based on the known spatial relationship of arms 60H and 60L within a single antenna 30 in device 10 and/or the known spatial relationship between antennas 30 in device 10 (e.g., for detecting a swipe gesture).

For example, gesture processor 38 may detect a first gesture input (e.g., a first swipe gesture) if/when the gathered impedance information ZMEAS in low band FL changes and then the gathered impedance information ZMEAS in high band FH changes immediately after or within a short predetermined time period of change in low band FL (e.g., on the order of ns, ms, microseconds, etc.). Conversely, gesture processor 38 may detect a second gesture input (e.g., a second swipe gesture) if/when the gathered impedance information ZMEAS in high band FH changes and then the gathered impedance information ZMEAS in low band FL changes immediately after or within the short predetermined time period of change in high band FH. Gesture processor 38 may output gesture information GINFO that includes or identifies the detected user input gesture. This is illustrative and may be generalized to any desired number of changes in impedance information ZMEAS in any desired number of two or more frequency bands as gathered using any desired number of at least two arms of a single dual band antenna or using any desired number of one or more arms of any desired number of one or more antennas. The detected user gesture inputs may be any desired user gesture inputs (e.g., each associated with different respective predetermined or calibrated patterns in the change of impedance information ZMEAS across at least frequency bands FL and FH over time).

At operation 98, device 10 may take suitable action based on the detected user input gesture. As examples, device 10 may increase the volume of speaker 70 (FIG. 5) (e.g., by increasing the gain of one or more amplifiers driving speaker 70), may decrease the volume of speaker 70 (e.g., by decreasing the gain of one or more amplifiers driving speaker 70), may switch device 10 between an active noise cancellation mode, an ambient sound amplification mode (e.g., a transparency mode), and/or a default sound mode, may transmit a wireless signal to device 10' to engage or disengage a digital and/or artificial intelligence (AI) voice assistant, may configure microphone 76 to start or stop capturing audio signals, may increase or decrease a sensitivity of microphone 76, may transmit a control signal to device 10' (e.g., using radio-frequency signal RFSIG), and/or may perform any other desired action. The control signal transmitted to device 10' may include information identifying the detected user input gesture, may instruct device 10' to display a graphic on a display of device 10' (e.g., a volume up graphic, a volume down graphic, a play graphic, a pause graphic, a call ended graphic, a call initiated graphic, etc.), may include a stop or pause instruction for device 10' to stop or pause transmitting audio data to device 10, may include a play instruction for device 10' to un-pause or begin transmitting audio data to device 10, may include a voice call hangup instruction, may include a voice call initialization instruction, may include a skip track instruction for device 10' to skip to the next track in a playlist of tracks being played at device 10 via wireless streaming from device 10', may include a previous track instruction for device 10' to go back to a previous track in the playlist, may include a fast forward instruction for device 10' to fast forward or skip ahead in audio data being played back on device 10, may include a rewind instruction for device 10' to rewind or skip back in audio data being played on device 10, etc. If desired, processing may loop back to operation 94 via path 99.

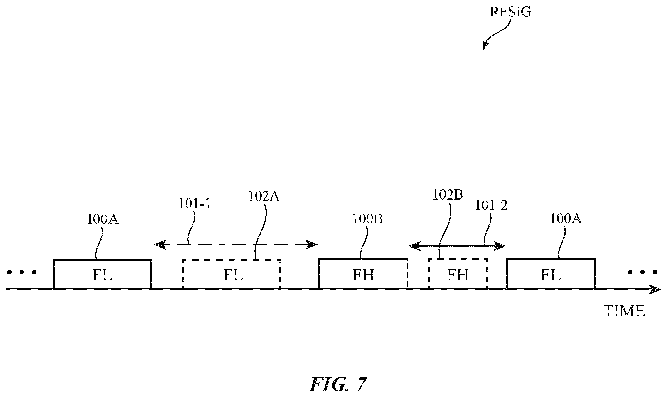

FIG. 7 is a timing diagram showing illustrative data blocks that may be transmitted by radio(s) 26 and antenna(s) 30 in radio-frequency signal RFSIG (e.g., while processing operation 90 of FIG. 6). As shown in FIG. 7, radio-frequency signal RFSIG may include a series of scheduled transmission blocks 100 (e.g., symbols, packets, frames, datagrams, etc.). Each transmission block 100 may contain wireless data payload and may be transmitted at a corresponding frequency in high band FH, low band FL, and/or another frequency band. The data content, timing, and/or frequency of each scheduled transmission block 100 may be determined or dictated by the communications schedule associated with radio(s) 26 (e.g., the time and frequency resources of transmission blocks 100 are scheduled by the communications schedule). In the example of FIG. 7, for instance, scheduled transmission blocks 100 may include one or more scheduled transmission blocks 100A transmitted at a frequency in low band FL. Scheduled transmission blocks 100 may include one or more scheduled transmission blocks 100B transmitted at a frequency in high band FH.

In some implementations, radio(s) 26 may include a first radio that transmits radio-frequency signal RFSIG and scheduled transmission blocks 100A in low band FL and may include a second radio that transmits radio-frequency signal RFSIG and scheduled transmission blocks 100B in high band FH. In other implementations, a single radio 26 may have a first port that transmits radio-frequency signal RFSIG and scheduled transmission blocks 100A in low band FL and may have a second port that transmits radio-frequency signal RFSIG and scheduled transmission blocks 100B in high band FH. In other implementations, radio(s) 26 may concurrently transmit transmission blocks 100A, 100B, 102A, and/or 102B. In these implementations, if desired, signal coupler 34 (FIG. 2) may include a first signal coupler that performs impedance measurements in high band FH and a second signal coupler that performs impedance measurements in low band FL.

If desired, impedance processor 36 may generate impedance information ZMEAS (e.g., while processing operation 94 of FIG. 6) based on one or more of the scheduled transmission blocks 100 in radio-frequency signal RFSIG. For example, some of the radio-frequency signal RFSIG carrying the wireless data of at least one scheduled transmission block 100A may be coupled off transmission line path 32 (FIG. 2) (e.g., as both a FW signal and an RW signal) to generate impedance information ZMEAS for antenna 30 in low band FL. Additionally or alternatively, some of the radio-frequency signal RFSIG carrying the wireless data of at least one scheduled transmission block 100B may be coupled off transmission line path 32 (FIG. 2) (e.g., as both a FW signal and an RW signal) to generate impedance information ZMEAS for antenna 30 in low band FH.

Scheduled transmission blocks 100 may be separated in time by gaps 101 (e.g., time periods without scheduled transmissions of radio-frequency signal RFSIG by radio(s) 26). Radio(s) 26 may, if desired, receive radio-frequency signals from device 10' during one or more of gaps 101 (e.g., pursuant to the communications schedule). If desired, radio(s) 36 may transmit one or more unscheduled transmission blocks 102 (e.g., symbols, packets, frames, datagrams, etc.) in radio-frequency signal RFSIG within one or more of gaps 101 (e.g., while processing operation 92 of FIG. 6). Since unscheduled transmission blocks 102 are unscheduled, the data content, timing, and frequency of each scheduled unscheduled transmission block 102 is not included within or determined by the communications schedule associated with radio(s) 26. Unscheduled transmission blocks 102 may include, as examples, advertising packets, reference packets, control packets, and/or null packets (e.g., packets having a header dictated by the communications protocol but an empty or null data payload).

In the example of FIG. 7, for instance, unscheduled transmission blocks 102 may include one or more unscheduled transmission blocks 102A transmitted at a frequency in low band FL and/or may include one or more unscheduled transmission blocks 102B transmitted at a frequency in high band FH. If desired, a given gap 101 may contain zero unscheduled transmission blocks 102, may include a single unscheduled transmission block 102 (e.g., unscheduled transmission block 102A or 102B), or may include two or more unscheduled transmission blocks 102 (e.g., unscheduled transmission blocks 102A and/or 102B).

Impedance processor 36 may generate impedance information ZMEAS (e.g., while processing operation 94 of FIG. 6) based on one or more of the unscheduled transmission blocks 102 in radio-frequency signal RFSIG. For example, some of the radio-frequency signal RFSIG carrying at least one unscheduled transmission block 102A may be coupled off transmission line path 32 (FIG. 2) (e.g., as both a FW signal and an RW signal) to generate impedance information ZMEAS for antenna 30 in low band FL. Additionally or alternatively, some of the radio-frequency signal RFSIG carrying at least one unscheduled transmission block 102B may be coupled off transmission line path 32 (FIG. 2) (e.g., as both a FW signal and an RW signal) to generate impedance information ZMEAS for antenna 30 in low band FH.

In the example of FIG. 7, unscheduled transmission block 102A is transmitted within a gap 101-1 between consecutive scheduled transmission blocks 100, where a scheduled transmission block 100A is transmitted prior to unscheduled transmission block 102A and a scheduled transmission block 100B is transmitted after unscheduled transmission block 102A. If desired, at least one additional unscheduled transmission block 102A and/or at least one unscheduled transmission block 102B may be transmitted before and/or after unscheduled transmission block 102A within gap 101-1. Alternatively, one or more unscheduled transmission blocks 102B may be transmitted within gap 101-1 instead of unscheduled transmission block 102A. Alternatively, the scheduled transmission block 100B after gap 101-1 may be replaced with a scheduled transmission block 100A and/or the scheduled transmission block 100A before gap 101-1 may be replaced with another scheduled transmission block 100B.

In the example of FIG. 7, unscheduled transmission block 102B is transmitted within a gap 101-2 between consecutive scheduled transmission blocks 100, where a scheduled transmission block 100B is transmitted prior to unscheduled transmission block 102B and a scheduled transmission block 100A is transmitted after unscheduled transmission block 102B. If desired, at least one additional unscheduled transmission block 102B and/or at least one unscheduled transmission block 102A may be transmitted before and/or after unscheduled transmission block 102B within gap 101-2. Alternatively, one or more unscheduled transmission blocks 102A may be transmitted within the gap 101-2 instead of unscheduled transmission block 102B. Alternatively, the scheduled transmission block 100A after gap 101-2 may be replaced with a scheduled transmission block 100B and/or the scheduled transmission block 100B before gap 101-2 may be replaced with a scheduled transmission block 100A. Two or more scheduled transmission blocks 100 and/or one or more gaps 101 may be between consecutive unscheduled transmission blocks 102 if desired. Transmission blocks 100 and 102 may be transmitted in any desired number of two or more frequency bands.

In general, impedance processor 36 may generate impedance information ZMEAS based on at least one transmission block in low band FL (e.g., an unscheduled transmission block 102A or a scheduled transmission block 100A) and at least one transmission block in high band FH (e.g., an unscheduled transmission block 102B or a scheduled transmission block 100B). Impedance processor 36 may, for example, generate impedance information ZMEAS based on at least a scheduled transmission block 100A and a scheduled transmission block 100B, a scheduled transmission block 100A and an unscheduled transmission block 102B, an unscheduled transmission block 102A and a scheduled transmission block 100B, or an unscheduled transmission block 102A and an unscheduled transmission block 102B. Impedance processor 36 may generate impedance information ZMEAS based on multiple scheduled transmission blocks 100A, multiple scheduled transmission blocks 100B, multiple unscheduled transmission blocks 102A, and/or multiple unscheduled transmission blocks 102B if desired. The timing of scheduled transmission blocks 100 and gaps 101 may be faster than the response time of a capacitive sensor electrode array. As such, performing gesture detection using antenna impedance in at least frequency bands FL and FH may be faster than performing gesture detection using a capacitive sensor electrode array.

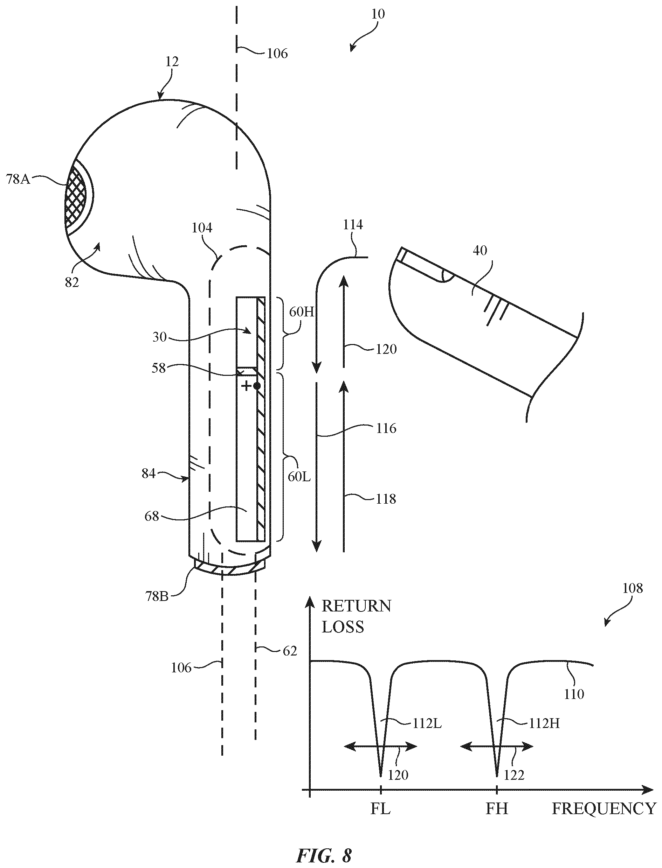

FIG. 8 is a perspective view of device 10 illustrating an example in which device 10 is an earbud having head 82 and stalk 84, antenna 30 is a dual band antenna (e.g., antenna 30 of FIG. 4) disposed in stalk 84, and device 10 performs impedance measurements of antenna 30 to detect swipe gestures such as volume up and volume down gestures. As shown in FIG. 8, head 82 of housing 12 may be wider and/or thicker than stalk 84. Stalk 84 may be longer and/or thinner than head 82. Stalk 84 may extend along a linear longitudinal axis 106. Stalk 84 may have a first end or tip that includes speaker port 78B. Stalk 84 may have an opposing second end at head 82. Head 82 may extend radially away from stalk 84 and longitudinal axis 106. Speaker port 78A may be formed in head 82.

FIG. 8 shows a cutout region 104 of stalk 84 to illustrate the interior of device 10 within stalk 84 (e.g., interior 80 of FIG. 5). As shown within cutout region 104, antenna 30 and substrate 68 may be mounted within stalk 84. Printed circuit 64 and SiP 66 of FIG. 5 have been omitted from FIG. 8 for the sake of clarity. Arms 60H and 60L of antenna 30 may extend along the length of stalk 84 (e.g., from opposing sides of return path 58). Arms 60H and 60L may, for example, extend along linear axis 62 (e.g., colinear with linear axis 62). Linear axis 62 may be parallel to the longitudinal axis 106 of stalk 84. This may allow sufficient room for the lengths of arms 60H and 60L to fit within stalk 84 for radiating in frequency bands FH and FL respectively (e.g., without being blocked by the battery or other metallic components in head 82) while also simplifying the integration of antenna 30 within device 10.

During impedance measurement (e.g., while processing operation 94 of FIG. 6), low band arm 60L of antenna 30 may transmit radio-frequency signal RFSIG (FIG. 2) in low band FL and high band arm 60H of antenna 30 may transmit radio-frequency signal RFSIG in high band FH. The transmitted radio-frequency signal RFSIG may include a series of scheduled transmission blocks 100A in low band FL and scheduled transmission blocks 100B in high band FH (FIG. 7). If desired, radio-frequency signal RFSIG may also include at least one unscheduled transmission block 102A in low band FL and/or at least one unscheduled transmission blocks 102B in high band FH (FIG. 7). If desired, radio-frequency signal RFSIG may include no unscheduled transmission blocks 102.

The signal coupler 34 (FIG. 2) coupled to antenna 30 may couple some of radio-frequency signal RFSIG in low band FL and may couple some of radio-frequency signal RFSIG in high band FH off of the transmission line path 32 coupled to antenna 30. Impedance processor 36 (FIG. 2) may generate impedance information ZMEAS in low band FL based on the radio-frequency signal RFSIG transmitted by low band arm 60L in low band FL (e.g., based on the portion of radio-frequency signal RFSIG in low band FL coupled off of the transmission line path by the signal coupler). The signal coupler may also generate impedance information ZMEAS in high band FH based on the radio-frequency signal RFSIG transmitted by high band arm 60H in high band FH (e.g., based on the portion of radio-frequency signal RFSIG in high band FH coupled off of the transmission line path by the signal coupler).

Plot 108 of FIG. 8 illustrates the impedance (e.g., return loss) of antenna 30. As shown by curve 110 in plot 108, antenna 30 may exhibit response peaks (e.g., resonances) 112 such as at least a first response peak 112L in low band FL and a second response peak 112H in high band FH. Antenna 30 may resonate in both low band FL (e.g., as given by the resonance of low band arm 60L) and in high band FH (e.g., as given by the resonance of high band arm 60H). If desired, antenna 30 may exhibit additional response peaks. The impedance information ZMEAS generated by impedance processor 36 may, for example, include, characterize, or otherwise identify response peaks 112L and 112H of curve 110.

As shown in FIG. 8, external object 40 (e.g., the user's finger) may move near and/or relative to stalk 84 (e.g., in a swiping motion parallel to longitudinal axis 106). Gesture processor 38 (FIG. 2) may detect a user input gesture performed by external object 40 (e.g., a swipe gesture such as a volume up or volume down gesture) based on changes in impedance information ZMEAS over time and across frequency bands FH and FL (e.g., changes in response peaks 112L and 112H of curve 110 over time) and based on the orientation of antenna arms 60H and 60L parallel to the longitudinal axis 106 of stalk 84.

For example, external object 40 may perform a first gesture (e.g., a first swipe gesture such as a volume down gesture). In performing the first gesture, external object 40 may move from the top of stalk 84 downwards along the length of stalk 84 (e.g., in contact with housing 12 or within a predetermined radial distance from stalk 84). As shown by arrow 114, downward lateral motion of external object 40 into, along/across, and out of positions overlapping high band arm 60H may produce a corresponding change in the complex impedance of antenna 30 in high band FH. This may, for example, produce a change over time in response peak 112H of curve 110, as shown by arrow 122. As external object 40 continues to move downwards along stalk 84, external object 40 may move laterally downward into, along/across, and out of positions overlapping low band arm 60L (as shown by arrow 116), which produces a corresponding change in the complex impedance of antenna 30 in low band arm FL. This may, for example, produce a change over time in response peak 112L of curve 110, as shown by arrow 120.

Given this, gesture processor 38 (FIG. 2) may detect the first gesture (e.g., a first swipe gesture or a volume down gesture) if/when impedance processor 36 generates impedance information ZMEAS that includes a predetermined (e.g., calibrated) change in the impedance of antenna 30 within high band FH at a first time and then generates impedance information ZMEAS that includes a predetermined change in the impedance of antenna 30 within low band FL at a second time immediately following or within a short time period after the first time (e.g., if/when gesture processor 38 detects a change in response peak 112H, as shown by arrow 122, followed by a change in response peak 112L, as shown by arrow 120). Device 10 may reduce the volume of the speaker in head 82 and/or may perform any other desired operations in response to detecting the first gesture.

Conversely, external object 40 may perform a second gesture (e.g., a second swipe gesture such as a volume up gesture). In performing the second gesture, external object 40 may move from the bottom of stalk 84 upwards along the length of stalk 84 (e.g., in contact with housing 12 or within a predetermined radial distance of stalk 84). As shown by arrow 118, upward lateral motion of external object 40 into, along/across, and out of positions overlapping low band arm 60L may produce a corresponding change in the complex impedance of antenna 30 in low band FL. This may, for example, produce a change over time in response peak 112L of curve 110, as shown by arrow 120. As external object 40 continues to move upwards along stalk 84, external object 40 may move laterally upward into, along/across, and out of positions overlapping high band arm 60H (as shown by arrow 120), which produces a corresponding change in the complex impedance of antenna 30 in high band arm FH. This may, for example, produce a change over time in response peak 112H of curve 110, as shown by arrow 122.

Given this, gesture processor 38 (FIG. 2) may detect the second gesture (e.g., a second swipe gesture or a volume up gesture) if/when impedance processor 36 generates impedance information ZMEAS that includes a predetermined (e.g., calibrated) change in the impedance of antenna 30 within low band FL at a first time and then generates impedance information ZMEAS that includes a predetermined change in the impedance of antenna 30 within high band FH at a second time immediately following or within a short time period after the first time (e.g., if/when gesture processor 38 detects a change in response peak 112L, as shown by arrow 120, followed by a change in response peak 112H, as shown by arrow 122). Device 10 may, for example, increase the volume of the speaker in head 82 and/or may perform any other desired operations in response to detecting the first gesture.

This example is illustrative and non-limiting. If desired, the positions of low band arm 60L and high band arm 60H in antenna 30 may be swapped. For example, high band arm 60H may be interposed between return path 58 and the tip of stalk 84. In these implementations, the second gesture (e.g., a volume up gesture) may be detected when a change in response peak 112H is followed by a change in response peak 112L and the first gesture (e.g., a volume down gesture) may be detected when a change in response peak 112L is followed by a change in response peak 112H. If desired, the first and second gestures may be used to perform any other desired actions using device 10. In general, the gesture processor may detect any desired user gesture inputs based on any desired changes in the impedance of antenna 30 and/or one or more additional antennas 30 over time within and/or between frequency bands FL and FH and/or other frequency bands (e.g., as external object 40 moves relative to arms 60H and arm 60L and/or one or more other arms of antenna 30 and/or one or more other antennas in device 10).

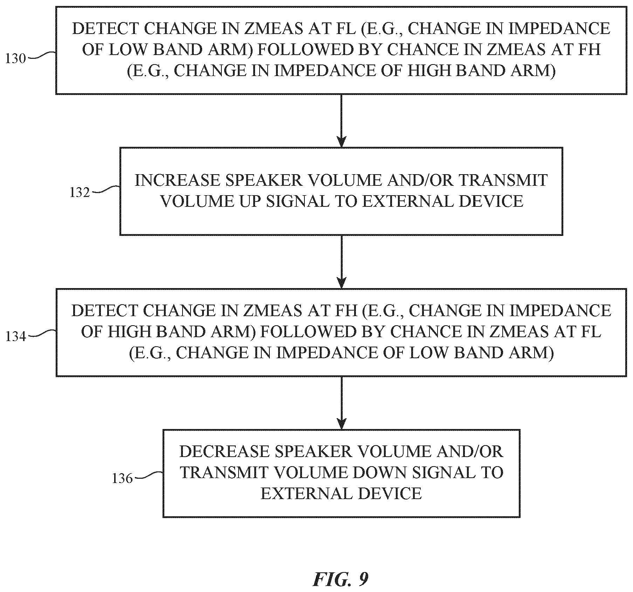

FIG. 9 is a flow chart of illustrative operations involved in detecting the first and second gesture inputs using the dual band antenna 30 of FIG. 8. Operations 130 and 134 of FIG. 9 may, for example, be performed during one or more iterations of operation 96 of FIG. 6. Operations 132 and 136 of FIG. 9 may, for example, be performed during one or more iterations of operation 98 of FIG. 6. Operations 130 and 132 or operations 134 and 136 of FIG. 9 may be omitted if desired. Operations 134 and 136 may be performed prior to operations 130 and 132 in some situations (e.g., depending on the impedance information ZMEAS gathered using the corresponding antenna 30).

At operation 130, gesture processor 38 may detect (e.g., estimate, calculate, compute, produce, output, generate, identify, etc.) a change over time in impedance information ZMEAS in low band FL (e.g., a predetermined or pre-calibrated change in the impedance of low band arm 60L over time such as a change associated with arrow 120 of FIG. 8) followed by a change over time in impedance information ZMEAS in high band FH (e.g., a predetermined or pre-calibrated change over time in the impedance of high band arm 60H such as a change associated with arrow 122 of FIG. 8).

At operation 132 (e.g., responsive to operation 130), control circuitry 14 (FIG. 1) may increase the volume of speaker 70 (FIG. 5) and/or may transmit a volume up signal to device 10' (e.g., in radio-frequency signal RFSIG). The volume up signal may, for example, identify to device 10' that device 10 has received a first gesture input such as a first swipe input or a volume up input. If desired, device 10' may display a graphical element associated with the first gesture input and/or may perform any other desired actions.

At operation 134, gesture processor 38 may detect (e.g., estimate, calculate, compute, produce, output, generate, identify, etc.) a change over time in impedance information ZMEAS in high band FH (e.g., a predetermined or pre-calibrated change in the impedance of high band arm 60H over time such as a change associated with arrow 122 of FIG. 8) followed by a change over time in impedance information ZMEAS in low band FL (e.g., a predetermined or pre-calibrated change in the impedance of low band arm 60L over time such as a change associated with arrow 120 of FIG. 8).

At operation 136 (e.g., responsive to operation 134), control circuitry 14 (FIG. 1) may decrease the volume of speaker 70 (FIG. 5) and/or may transmit a volume down signal to device 10' (e.g., in radio-frequency signal RFSIG). The volume down signal may, for example, identify to device 10' that device 10 has received a second gesture input such as a second swipe input or a volume down input. If desired, device 10' may display a graphical element associated with the second gesture input and/or may perform any other desired actions. In implementations where the locations of arms 60H and 60L are reversed in the configuration of FIG. 8, operations 130 and 134 of FIG. 9 may be swapped.

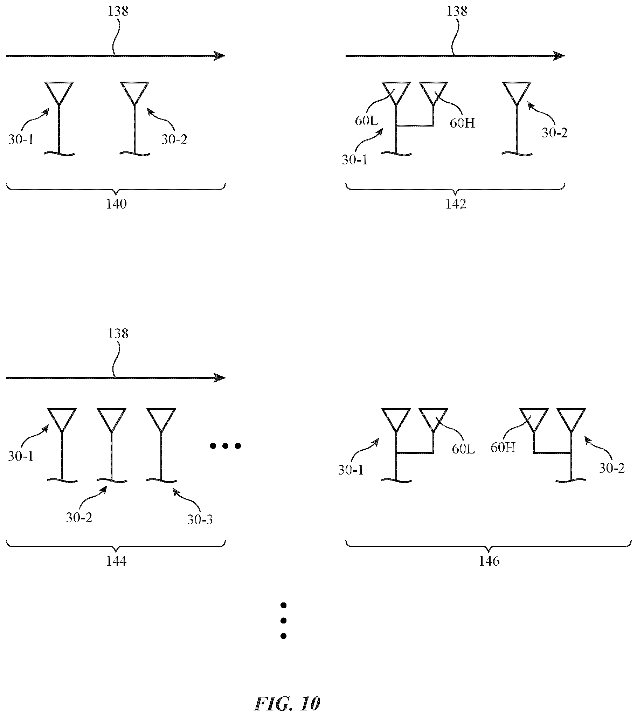

The example of FIG. 8 in which a swipe gesture is detected using consecutive impedance changes of arms 60H and 60L of a single antenna 30 (e.g., in corresponding frequency bands FH and FL) is illustrative and non-limiting. FIG. 10 illustrates antenna additional configurations for which the swipe gesture (or any other desired gestures) may be detected using the impedance of antenna(s) 30 (e.g., while processing operation 96 of FIG. 6 and the operations of FIG. 9).

For example, as shown in portion 140 of FIG. 10, device 10 may include a pair of antennas such as antennas 30-1 and 30-2 (e.g., in a predetermined and known spatial relationship to each other and/or the housing of device 10). Antenna 30-1 may convey radio-frequency signals in a first band and antenna 30-2 may convey radio-frequency signals in a second band. Device 10 may detect a swipe gesture (e.g., associated with motion of external object 40 in the direction of arrow 138) by first measuring a change in the impedance of antenna 30-1 in the first band followed by a change in the impedance of antenna 30-2 in the second band.

Portion 142 of FIG. 10 shows another example in which antenna 30-1 includes low band arm 60L and high band arm 60H (e.g., in a predetermined and known spatial relationship to each other, antenna 30-2, and/or the housing of device 10). Antenna 30-2 may convey radio-frequency signals in a third band (e.g., low band FL, high band FH, or another band). Device 10 may detect a swipe gesture (e.g., associated with motion of external object 40 in the direction of arrow 138) by first measuring a change in the impedance of antenna 30-1 in the low band FL, followed by a change in the impedance of antenna 30-1 in high band FH, followed by a change in the impedance of antenna 30-2 in the third band.

As shown in portion 144 of FIG. 10, device 10 may include more than two antennas used for gesture detection, such as at least antennas 30-1, 30-2, and 30-3 (e.g., in a predetermined and known spatial relationship to each other, antenna 30-2, and/or the housing of device 10). Antenna 30-1 may convey radio-frequency signals in a first band, antenna 30-2 may convey radio-frequency signals in a second band, antenna 30-3 may convey radio-frequency signals in a third band, etc. Device 10 may detect a swipe gesture (e.g., associated with motion of external object 40 in the direction of arrow 138) by first measuring a change in the impedance of antenna 30-1 in the first band, followed by a change in the impedance of antenna 30-2 in the second band, followed by a change in the impedance of antenna 30-3 in the third band, etc.

As shown in portion 146 of FIG. 10, device 10 may detect a swipe gesture (e.g., associated with motion of external object 40 in the direction of arrow 138) by first measuring a change in the impedance of a low band arm 60L of antenna 30-1 in low band FL followed by a change in the impedance of a high band arm 60H of antenna 30-2 in high band FH. These examples are illustrative and non-limiting.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

Device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In accordance with an embodiment, a method of operating a wireless earbud includes transmitting, using one or more radios, a radio-frequency signal over one or more antennas in a first frequency band and a second frequency band, measuring, using a signal coupler, an impedance of the one or more antennas in the first frequency band and the second frequency band, and detecting, using one or more processors, a gesture based on a first change of the impedance in the first frequency band, a second change of the impedance in the second frequency band, and an order of the first and second changes in the impedance.

Preferably, the method optionally includes transmitting a control signal based on the detected gesture to an external device that is wirelessly paired with the first device.

Preferably, the method optionally includes performing, using the one or more processors, a first action responsive to the second change occurring prior to the first change.

Preferably, the method optionally includes performing, using the one or more processors, a second action different than the first action responsive to the first change occurring prior to the second change.

Preferably, the method optionally includes emitting sound using a speaker, where the first action includes increasing a volume of the sound and the second action includes decreasing the volume of the sound.

Preferably, the first action optionally includes transmitting, using the one or more radios and the antenna, a first instruction to a paired device, the second action optionally including transmitting, using the one or more radios and the antenna, a second instruction to the paired device that is different from the first instruction.

Preferably, the radio-frequency signal optionally carries a series of scheduled transmission blocks according to a communications schedule.

Preferably, the series of scheduled transmission blocks optionally includes a first scheduled transmission block in the first frequency band, the series of scheduled transmission blocks includes a second scheduled transmission block in the second frequency band, and measuring the impedance in the first and second frequency bands includes measuring the impedance based on the first scheduled transmission block and the second scheduled transmission block.

Preferably, the method optionally includes transmitting, in the first frequency band of the radio-frequency signal, an unscheduled transmission block during a gap between the first scheduled transmission block and the second scheduled transmission block, where the unscheduled transmission block is not specified by the communications schedule, and measuring the impedance in the first frequency band includes measuring the impedance in the first frequency band based on the unscheduled transmission block.

Preferably, the first scheduled transmission block is optionally transmitted in the second frequency band and measuring the impedance in the second frequency band optionally includes measuring the impedance in the second frequency band based on the first scheduled transmission block.

Preferably, the method optionally includes transmitting, in the second frequency band of the radio-frequency signal, an additional unscheduled transmission block that is not specified by the communications schedule, where measuring the impedance in the second frequency band includes measuring the impedance in the second frequency band based on the additional unscheduled transmission block.

In accordance with an embodiment, a wireless earbud includes an antenna having a first arm and a second arm that is longer than the first arm, a transmission line path coupled to the antenna, a signal coupler disposed along the transmission line path, and one or more processors configured to use the signal coupler to measure a first impedance of the first arm and a second impedance of the second arm, and detect a gesture based on a change in the first impedance over time and a change in the second impedance over time.

Preferably, the one or more processors optionally being configured to detect the gesture based on an order in which the first impedance and the second impedance change over time.

Preferably, the wireless earbud optionally includes a speaker configured to produce sound, the one or more processors being configured to adjust the sound produced by the speaker based on the detected gesture.

Preferably, the wireless earbud optionally includes a housing having a head and a stalk, where the stalk extends away from the head along a longitudinal axis, the speaker is disposed in the head, and the antenna is disposed in the stalk.

Preferably, the antenna optionally includes an antenna ground and a return path coupled to the antenna ground, the first and second arms extending from opposing sides of the return path.

Preferably, the first and second arms optionally extend along a linear axis parallel to the longitudinal axis of the stalk.

Preferably, the stalk optionally has a tip opposite the head, the second arm is interposed between the first arm and the tip, the one or more processors is configured to decrease a volume of the speaker responsive to the first impedance changing prior to the second impedance, and the one or more processors is configured to increase a volume of the speaker responsive to the second impedance changing prior to the first impedance.

In accordance with an embodiment, a method of operating an electronic device includes transmitting, using one or more radios, transmission blocks according to a communications schedule, the transmission blocks being separated in time by gaps, transmitting, using an antenna, unscheduled transmission blocks during at least one of the gaps, measuring, using a signal coupler, an impedance of the antenna based on the unscheduled transmission blocks, detecting, using one or more processors, a gesture based on a change in the impedance over time, and transmitting, to an external device that is wirelessly paired with the electronic device, a signal based on the detected gesture.

Preferably, the method optionally includes receiving audio data packets from the external device, where the unscheduled transmission blocks are not included in the communications schedule, the transmission blocks including acknowledgement packets to the audio data packets received from the external device.

The foregoing is illustrative and various modifications can be made by those skilled in the art without departing from the scope and spirit of the described embodiments. The foregoing embodiments may be implemented individually or in any combination.

## Claims

1. A method of operating a wireless earbud, comprising:
transmitting, using one or more radios, a radio-frequency signal over one or more antennas in a first frequency band and a second frequency band;
measuring, using a signal coupler, an impedance of the one or more antennas in the first frequency band and the second frequency band; and
detecting, using one or more processors, a gesture based on a first change of the impedance in the first frequency band, a second change of the impedance in the second frequency band, and an order of the first and second changes in the impedance.

2. The method of claim 1, further comprising:
transmitting a control signal based on the detected gesture to an external device that is wirelessly paired with the first device.

3. The method of claim 1 or claim 2, further comprising:
performing, using the one or more processors, a first action responsive to the second change occurring prior to the first change.

4. The method of claim 3, further comprising:
performing, using the one or more processors, a second action different than the first action responsive to the first change occurring prior to the second change.

5. The method of claim 4, further comprising:
emitting sound using a speaker, wherein the first action includes increasing a volume of the sound and the second action includes decreasing the volume of the sound.

6. The method of claim 4 or claim 5, wherein the first action comprises transmitting, using the one or more radios and the antenna, a first instruction to a paired device, the second action including transmitting, using the one or more radios and the antenna, a second instruction to the paired device that is different from the first instruction.

7. The method of any preceding claim, wherein the radio-frequency signal carries a series of scheduled transmission blocks according to a communications schedule.

8. The method of claim 7, wherein the series of scheduled transmission blocks includes a first scheduled transmission block in the first frequency band, the series of scheduled transmission blocks includes a second scheduled transmission block in the second frequency band, and measuring the impedance in the first and second frequency bands includes measuring the impedance based on the first scheduled transmission block and the second scheduled transmission block.

9. The method of claim 7, further comprising:
transmitting, in the first frequency band of the radio-frequency signal, an unscheduled transmission block during a gap between the first scheduled transmission block and the second scheduled transmission block, wherein the unscheduled transmission block is not specified by the communications schedule, and measuring the impedance in the first frequency band includes measuring the impedance in the first frequency band based on the unscheduled transmission block.

10. The method of claim 9, wherein the first scheduled transmission block is transmitted in the second frequency band and measuring the impedance in the second frequency band comprises measuring the impedance in the second frequency band based on the first scheduled transmission block.

11. The method of claim 9 or claim 10, further comprising:
transmitting, in the second frequency band of the radio-frequency signal, an additional unscheduled transmission block that is not specified by the communications schedule, wherein measuring the impedance in the second frequency band includes measuring the impedance in the second frequency band based on the additional unscheduled transmission block.

12. A wireless earbud comprising:
an antenna having a first arm and a second arm that is longer than the first arm;
a transmission line path coupled to the antenna;
a signal coupler disposed along the transmission line path; and
one or more processors configured to
use the signal coupler to measure a first impedance of the first arm and a second impedance of the second arm, and
detect a gesture based on a change in the first impedance over time and a change in the second impedance over time.

13. The wireless earbud of claim 12, the one or more processors being configured to detect the gesture based on an order in which the first impedance and the second impedance change over time.

14. The wireless earbud of claim 12 or claim 13, further comprising:
a speaker configured to produce sound, the one or more processors being configured to adjust the sound produced by the speaker based on the detected gesture.

15. The wireless earbud of claim 14, further comprising:
a housing having a head and a stalk, wherein the stalk extends away from the head along a longitudinal axis, the speaker is disposed in the head, and the antenna is disposed in the stalk, wherein the antenna comprises an antenna ground and a return path coupled to the antenna ground, the first and second arms extending from opposing sides of the return path, wherein the first and second arms extend along a linear axis parallel to the longitudinal axis of the stalk, wherein the stalk has a tip opposite the head, the second arm is interposed between the first arm and the tip, the one or more processors is configured to decrease a volume of the speaker responsive to the first impedance changing prior to the second impedance, and the one or more processors is configured to increase a volume of the speaker responsive to the second impedance changing prior to the first impedance.
